# EUROPEAN PATENT SPECIFICATION

(11) **EP 3 525 186 B1**
(45) Date of publication and mention of the grant of the patent: **28.10.2020**
(21) Application number: 19166792.2
(22) Date of filing: 18.01.2016
(51) Int. Cl.: G08B 21/06, G06K 9/00

(54) **DRIVER MONITORING SYSTEM AND DRIVER MONITORING METHOD FOR A MOTOR VEHICLE**
FAHRERÜBERWACHUNGSSYSTEM UND FAHRERÜBERWACHUNGSVERFAHREN FÜR EIN KRAFTFAHRZEUG
SYSTÈME DE SURVEILLANCE DE CONDUCTEUR ET PROCÉDÉ DE SURVEILLANCE DE CONDUCTEUR POUR UN VÉHICULE AUTOMOBILE

(43) Date of publication of application: 14.08.2019
(62) Divisional of application: 16151708.1
(73) Proprietor: Veoneer Sweden AB, 447 83 Vårgårda (SE)
(72) Inventor: Knutsson, Per, 58331 Linköping (SE)
(74) Representative: Müller Verweyen

(56) References cited:
- WO-A1-2005/104009
- JP-A- H11 342 765
- US-A- 5 801 763
- US-A1- 2010 102 211
- US-A1- 2013 242 392
- US-B1- 6 351 280
- US-B1- 7 110 570

## Description

The invention relates to a driver monitoring system for a motor vehicle, comprising an illumination apparatus adapted to illuminate the driver's face with optical radiation, an imaging device directed to the driver's face, and a processing device adapted to evaluate driver attentiveness through image processing of images captured by said imaging device. The invention also relates to a corresponding driver monitoring method.

Driver monitoring systems of the above kind are generally known and designed to warn of dangers ahead if the driver takes his or her eyes off the road. In a known embodiment, a CCD camera is mounted on top of the steering column cover with built-in near-infrared LEDs, which enable the system to work accurately both day and night.

US 5,801,763 discloses a driver monitoring system employing a NIR light source and a CCD camera having one or more optical filters in order to restrict the wavelength sensitivity of the CCD camera to one or more desired wavelength regions.

For driver monitoring systems of the above kind, reflections of the illumination radiation on the driver's glasses may create strong artefacts in the images captured by the imaging device, and thus strongly disturb the image processing being essential to the functionality of the driver monitoring system.

JP H11 342765 A discloses a driver monitoring system according to the preamble of claim 1, where the polarized illumination radiation and the imaging side polarization filter each comprises vertical linear polarization directions.

US 7,110,570 B1 discloses a driver monitoring system comprising an IR illuminator unit emitting a beam of IR radiation towards a person and a video camera to receive the reflected radiation from the person. A polarization filter can be provided over the camera to filter out radiation that is not within the desirable infrared range, using electro-optical polarization that passes the IR wavelengths, but strongly attenuates the non-IR wavelengths.

US 6,351,280 B1 discloses an autostereoscopic display system, in which polarization is used to segregate images that are to be directed to different spatial regions.

US 2010/102211 A1 discloses an image capturing system having a rotational polarization filter on the illumination side and a polarizing plate composed of a plurality of polarized light filters having different polarizations and being arranged in a matrix on the imaging side.

US 2013/0242392 A1 discloses a near-to-eye display of a head-mounted display with a diffractive lens.

The problem underlying the invention is to provide a driver monitoring system and method where the detrimental influence of reflections of the illumination radiation on the driver's glasses is significantly lowered.

The invention solves this problem with the features of the independent claims. The invention is based on the finding that polarized radiation is influenced in a different manner by a specular reflection from the surface of the driver's glasses, in comparison to reflection from the driver's face. In this manner, by using polarized illumination radiation and filtering the reflected radiation between the driver's face and the imaging sensor using an imaging side polarization filter, specular reflection from the surface of the driver's glasses can be significantly suppressed in, or even blocked from, the images captured by the imaging device.

According to the invention, the polarized illumination radiation and the imaging side polarization filter each comprise linear polarization directions. In case of purely linear polarization, the angle between the polarization directions of the polarized illumination radiation and the imaging side polarization filter is at least 10°, more preferably at least 30°, even more preferably at least 50°, still more preferably at least 70°, and ideally is 90°. This embodiment relies on the finding that the polarization direction of linearly polarized light remains unchanged upon specular reflection from the surface of the driver's glasses. For example, in case of horizontal linear polarized illuminating light, the polarization of light reflected from the driver's glasses remains unchanged. In case the above mentioned angle is ideally 90°, the light reflected from the driver's glasses cannot pass the imaging side vertical linear polarization filter and, therefore, does not appear as an artefact in the captured image.

When using linear polarized illumination radiation, a problem can occur when the driver has polarized sunglasses, being equivalent to a linear polarization filter with a vertical polarization direction. Here, the driver's eye or face will appear dark if the polarization direction of the linear polarized illumination radiation or the imaging side linear polarization filter is horizontal. In order to overcome this problem, according to the invention the polarization directions of the polarized illumination radiation and of the imaging side polarization filter are oriented under an angle in the range of 30° to 60°, preferably in the range of 40° to 60°, ideally under an angle of 45° relative to the vertical, when the influence of polarized sunglasses becomes minimal.

In one embodiment the illumination apparatus comprises a light source which may generate non-polarized or low polarized radiation, and an illumination side polarization filter adapted to polarize the radiation generated by the light source. However, the invention can be realized without the use of an illumination side polarization filter, if a light source originally generating polarized light is used, like for example a laser diode. Generally, the degree of polarization of the polarized light generated by the illumination side polarization filter must not be 100% or close to 100%. However, a polarization degree of at least 50% can be preferred.

In the following the invention shall be illustrated on the basis of preferred embodiments with reference to the accompanying drawings, wherein:
- Fig. 1: shows a schematic drawing of a driver monitoring system under the invention; and
- Fig. 2: shows a schematic drawing of a polarization filter arrangement in an embodiment of the invention.

The driver monitoring system (DMS) 10 is mounted in a motor vehicle and comprises an illumination apparatus 20 adapted to generate a beam 22 of optical radiation illuminating the driver's face 21, and an optical imaging device 12 adapted to capture images of the illuminated driver's face 21.

The illumination apparatus 20 comprises a light source 23 adapted to generate a beam 24 of unpolarized or weakly polarized optical radiation. The optical radiation 24 generated by the illumination apparatus 20 is preferably non-visible in order to avoid disturbance of the driver. Preferably the light source 23 is an infrared light source, where infrared covers near IR with wavelengths below 5 microns, and/or far IR with wavelengths beyond 5 microns, where NIR can be preferred.

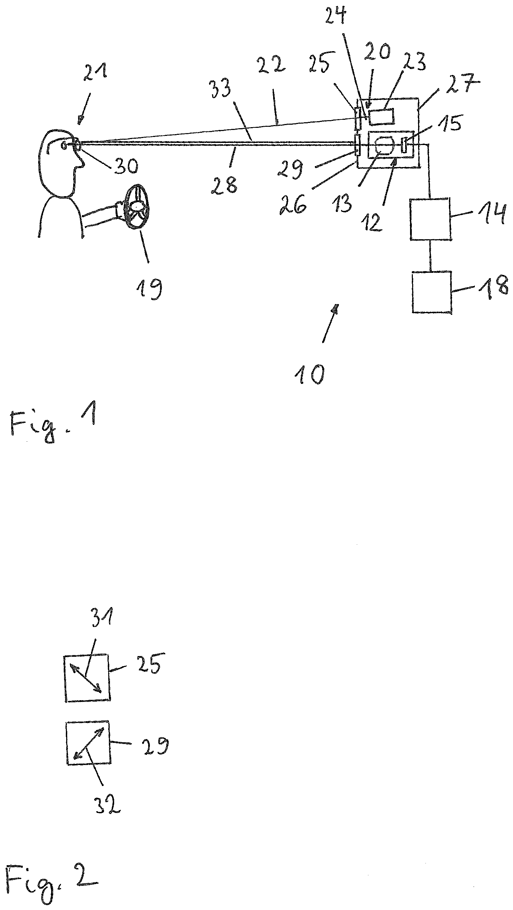

The illumination apparatus 20 preferably comprises an illumination side polarization filter 25 arranged in front of the light source 23 in order to generate a polarized light beam 22 from the light beam 24 generated by the light source 23. The polarization filter 25 can be formed by, or be part of, a transparent protection window 26 of the light source 23, or of a driver monitoring system unit 27 containing the light source 23 and the optical imaging device 12, like in Figure 1. Generally, the polarization filter 25 is arranged in the light path between the light source 23 and the driver's face 21. The polarization filter 25 may also be part of the light source 23. The polarized radiation 22 may also be generated from a light source 23, in case the light source 23 inherently emits polarized radiation. The essential function of the polarization filter 25 is to ensure that the light beam 22 falling on the driver's face is polarized, as will be explained later. Alternatively to the arrangement in Figure 1, the illumination apparatus 20 and the imaging device 12 may also be separate devices installed remote from each other at different places in the car.

The light beam 22 is reflected by the driver's face 21 and the light 28 reflected by the face is captured by the imaging device 12. The optical imaging device 12, which may be a camera, preferably operates in the same or a similar wavelength range as the illuminating apparatus. Therefore, the imaging device 12 preferably operates mainly in the non-visible wavelength range. Preferably the imaging device 12 is an infrared camera, more preferably an NIR camera. The camera 12 comprises an optics arrangement 13 with one or more lenses, and an image sensor 15 adapted to convert incidenting light into an electrical signal comprising the image information. As described above and visible in Figure 1, the illumination apparatus 20 and the imaging device 12 are arranged in a reflection measurement geometry.

The imaging device 12 is coupled to a data processing device 14 adapted to control the capture of images by the imaging device 12, receive the electrical signal containing the image information from the imaging device 12 and/or to process the image data received from the imaging device 12. Image and data processing carried out in the data processing device 14 comprises detection of a condition of the driver's face for example indicating driver attention off the road, e.g. due to drowsiness. The driver monitoring system 10 may also be used for other purposes than warning, for example vision control of cabin illumination, gadgets etc. Insufficient driver attentiveness may be estimated for example if the driver's eyes are closed for a predetermined period of time, and/or if the driver turns his or her face away from the road ahead.

If for example driver attentiveness off the road is detected by the driver monitoring system 10, the data processing device may activate a warning device 18 adapted to provide a warning signal to the driver. The optical, acoustic and/or haptic warning signal may comprise one or more of emitting an alarm sound, flash light, brief automatic application of the braking system, actuation of one or more restraint systems such as reversible safety belt pre-tensioning, and/or vibration of the steering wheel 19. If the driver does not react, safety measures such as automatic braking and/or automatic steering may be applied.

The output of a warning signal to the driver and/or further safety measures may depend on one or more further conditions in addition to detecting insufficient driver attentiveness, for example the detection of an obstacle in the estimated path of the motor vehicle by a separate vision system adapted to capture and process images from the surrounding of the motor vehicle.

The data processing device 14 is preferably a digital device which is programmed or programmable and preferably comprises a microprocessor, micro-controller, digital signal processor (DSP) or a System-On-Chip (SoC) device comprising, for example, FPGA, DSP, ARM and/or microprocessor functionality. The data processing device 14 can be realised in an on-board electronic control unit (ECU) and may be connected to the imaging device 12 via a separate cable or a vehicle data bus. In another embodiment the data processing device 14 can be integrated into the DMS unit 27. All steps from imaging, image processing to possible activation or control of driver warning device 18 are performed automatically and continuously during driving in real time.

An imaging side polarization filter 29 is arranged in front of the imaging device 12 in order to block specular reflection of the light beam 22 by the driver's glasses 30 onto the imaging device 12, as will be explained in the following. In the embodiment of Figure 1, the polarization filter 29 is formed by, or is part of, the transparent protection window 26 of the driver monitoring system unit 27. Generally, the polarization filter 29 is arranged in the light path between the driver's face 21 and the image sensor 15. The polarization filter 29 may also be part of the imaging device 12, for example forming a protective window in front of the optics arrangement 13, or as a polarization layer on the sensitive side of the image sensor 15.

An example of the polarization filters 25, 29 not falling under the scope of the invention as claimed is illustrated in Figure 2. Here, both polarization filters 25, 29 are linear polarization filters, i.e. they have a linear polarization axis 31, 32 forming an angle of 45° with the vertical (or horizontal), where the polarization axis 31 of the illumination side polarization filter 25 is oriented perpendicular to the polarization axis 32 of the imaging side polarization filter 29. Since the polarization direction 31 of linearly polarized light 22 remains unchanged upon specular reflection from the surface of the driver's glasses 30, the polarization of light 33 reflected from the driver's glasses 30 remains unchanged and cannot pass the imaging side polarization filter 29 due to the perpendicular orientation of the polarization directions. Therefore, light 33 reflected from the driver's glasses 30 does not appear as an artefact in the images captured by the imaging device 12. Of course, the polarization directions 31, 32 of the polarization filters 25, 29 could be vice versa relative to Figure 2.

## Claims

1. Driver monitoring system (10) for a motor vehicle, comprising an illumination apparatus (20) adapted to illuminate the driver's face (21) with optical radiation (22), an imaging device (12) directed to the driver's face (21), and a processing device (14) adapted to evaluate driver attentiveness through image processing of images captured by said imaging device (12), wherein said illumination apparatus (20) is adapted to generate polarized illumination radiation (22), and said driver monitoring system (10) comprises an imaging side polarization filter (29) arranged in the path of reflected radiation from the driver's face (21) to the imaging device (12), wherein the polarized illumination radiation (22) and the imaging side polarization filter (29) each comprise linear polarization (31, 32), **characterized in that** the angle between the linear polarization directions (31) of the polarized illumination radiation (22) and the imaging side polarization (32) is at least 10°, wherein the linear polarization direction (31) of the polarized illumination radiation (22) and (32) of the imaging side polarization filter (29) is oriented under an angle in the range of 30° to 60° relative to the vertical.

2. The driver monitoring system as claimed in claim 1, **characterized in that** the angle between the linear polarization directions (31) of the polarized illumination radiation (22) and the imaging side polarization (32) is 90°.

3. The driver monitoring system as claimed in claim 1 or 2, **characterized in that** the linear polarization direction (31) of the polarized illumination radiation (22) and/or (32) of the imaging side polarization filter (29) is oriented under an angle of 45° relative to the vertical.

4. The driver monitoring system as claimed in any one of the preceding claims, **characterized in that** said illumination apparatus (20) comprises a light source (23) and an illumination side polarization filter (25) adapted to polarize the radiation (24) generated by said light source (23) .

5. The driver monitoring system as claimed in claim 4, **characterized in that** the illumination side polarization filter (25) and/or the imaging side polarization filter (29) are formed by, or being part of, a cover window (26) of a driver monitoring system unit (27) .

6. Driver monitoring method for a motor vehicle, comprising illuminating the driver's face, capturing images of the driver's face using an imaging device (12) directed to the driver's face, and evaluating driver attentiveness through image processing of images captured by said imaging device (12), illuminating at least the driver's face with polarized illumination radiation (22), and filtering the reflected radiation (28, 33) from the driver's face using an imaging side polarization filter (29), wherein the polarized illumination radiation (22) and the imaging side polarization filter (29) each comprise linear polarization directions (31, 32), **characterized in that** the angle between the linear polarization directions (31) of the polarized illumination radiation (22) and the imaging side polarization (32) is at least 10°, wherein the linear polarization direction (31) of the polarized illumination radiation (22) and (32) of the imaging side polarization filter (29) is oriented under an angle in the range of 30° to 60° relative to the vertical.

## Patentansprüche

1. Fahrerüberwachungssystem (10) für ein Kraftfahrzeug, umfassend eine Beleuchtungsvorrichtung (20), die dazu ausgelegt ist, das Gesicht des Fahrers (21) mit optischer Strahlung (22) zu beleuchten, ein Bilderfassungsgerät (12), das auf das Gesicht des Fahrers (21) gerichtet ist und eine Verarbeitungsvorrichtung (14), die dazu ausgelegt ist, die Aufmerksamkeit des Fahrers durch Bildverarbeitung von Bildern, die mit dem Bilderfassungsgerät (12) erfasst wurden, zu bewerten, wobei die Beleuchtungsvorrichtung (20) dazu ausgelegt ist, eine polarisierte Beleuchtungsstrahlung (22) zu erzeugen, und das Fahrerüberwachungssystem (10) ein bilderfassungsseitiger Polarisationsfilter (29) umfasst, der im Strahlengang der vom Gesicht des Fahrers (21) reflektierten Strahlung zum Bilderfassungsgerät (12) angeordnet ist, wobei die polarisierte Beleuchtungsstrahlung (22) und der bilderfassungsseitige Polarisationsfilter (29) jeweils eine linear Polarisation (31, 32) aufweist, **dadurch gekennzeichnet, dass** der Winkel zwischen der linearen Polarisationsrichtung (31) der polarisierten Beleuchtungsstrahlung (22) und der bilderfassungsseitigen Polarisation (32) mindestens 10° beträgt, wobei die lineare Polarisationsrichtung (31) der polarisierten Beleuchtungsstrahlung (22) und (32) der bilderfassungsseitige Polarisationsfilter (29) mit einem Winkel im Bereich von 30° bis 60° relativ zur Vertikalen ausgerichtet ist.

2. Das Fahrerüberwachungssystem nach Anspruch 1, **dadurch gekennzeichnet, dass** der Winkel zwischen linear Polarisationsrichtung (31) der polarisierten Beleuchtungsstrahlung (22) und der bilderfassungsseitigen Polarisation (32) 90° beträgt.

3. Das Fahrerüberwachungssystem nach Anspruch 1 oder 2, **dadurch gekennzeichnet, dass** die lineare Polarisationsrichtung (31) der polarisierten Beleuchtungsstrahlung (22) und / oder (32) des bilderfassungsseitigen Polarisationsfilters (29) unter einem Winkel von 45° relativ zur der Vertikalen ausgerichtet ist.

4. Das Fahrerüberwachungssystem nach einem der obigen Ansprüche, **dadurch gekennzeichnet, dass** die Beleuchtungsvorrichtung (20) eine Lichtquelle (23) und einen beleuchtungsseitigen Polarisationsfilter (25) umfasst, der dazu ausgelegt ist, die von der Lichtquelle (23) erzeugte Strahlung (24) zu polarisieren.

5. Das Fahrerüberwachungssystem nach Anspruch 4, **dadurch gekennzeichnet, dass** der beleuchtungsseitige Polarisationsfilter (25) und / oder der bilderfassungsseitige Polarisationsfilter (29) durch ein Abdeckfenster (26) einer Fahrerüberwachungssystemeinheit (27) gebildet worden oder Teil davon sind.

6. Fahrerüberwachungsverfahren für ein Kraftfahrzeug, umfassend ein Beleuchten des Gesichts des Fahrers, ein Erfassen von Bildern des Gesichts des Fahrers mit einem Bilderfassungsgerät (12), das auf das Gesicht des Fahrers gerichtet ist, und ein Bewerten der Aufmerksamkeit des Fahrers durch Bildverarbeitung von Bildern, die mit dem Bilderfassungsgerät (12) erfasst wurden, umfassend ein Beleuchten mindestens des Gesichts des Fahrers mit einer polarisierten Beleuchtungsstrahlung (22) und Filtern der vom Gesicht des Fahrers reflektierten Strahlung (28 ,33) mit einem bilderfassungsseitigen Polarisationsfilter (29), wobei die polarisierte Beleuchtungsstrahlung (22) und der bilderfassungsseitige Polarisationsfilter (29) jeweils eine linear Polarisationsrichtung (31, 32) aufweisen, **dadurch gekennzeichnet, dass** der Winkel zwischen der linear Polarisationsrichtung (31) der polarisierten Beleuchtungsstrahlung (22) und der bilderfassungsseitigen Polarisation (32) mindestens 10° beträgt, wobei die linear Polarisationsrichtung (31) der polarisierten Beleuchtungsstrahlung (22) und (32) des bilderfassungsseitigen Polarisationsfilters (29) mit einem Winkel im Bereich von 30° bis 60° relativ zur der Vertikalen ausgerichtet ist.

## Revendications

1. Système de surveillance de conducteur (10) d'un véhicule à moteur, comprenant un appareil d'éclairage (20) conçu pour éclairer le visage du conducteur (21) avec un rayonnement optique (22), un dispositif d'imagerie (12) dirigé vers le visage du conducteur (21), et un dispositif de traitement (14) conçu pour évaluer l'attention du conducteur au moyen d'un traitement d'images des images capturées par ledit dispositif d'imagerie (12), dans lequel ledit appareil d'éclairage (20) est conçu pour émettre un rayonnement d'éclairage polarisé (22), et ledit système de surveillance de conducteur (10) comprend un filtre de polarisation côté imagerie (29) disposé sur le trajet de rayonnement réfléchi allant du visage du conducteur (21) au dispositif d'imagerie (12), dans lequel le rayonnement d'éclairage polarisé (22) et le filtre de polarisation côté imagerie (29) comprennent chacun une polarisation linéaire (31, 32), **caractérisé en ce que** l'angle entre les directions de polarisation linéaire (31) du rayonnement d'éclairage polarisé (22) et la polarisation côté imagerie (32) est d'au moins 10°, dans lequel la direction de polarisation linéaire (31) du rayonnement d'éclairage polarisé (22) et (32) du filtre de polarisation côté imagerie (29) est orientée selon un angle compris dans la plage de 30° à 60° par rapport à la verticale.

2. Le système de surveillance de conducteur selon la revendication 1, **caractérisé en ce que** l'angle entre les directions de polarisation linéaire (31) du rayonnement d'éclairage polarisé (22) et la polarisation côté imagerie (32) est de 90°.

3. Le système de surveillance de conducteur selon la revendication 1 ou 2, **caractérisé en ce que** la direction de polarisation linéaire (31) du rayonnement d'éclairage polarisé (22) et/ou (32) du filtre de polarisation côté imagerie (29) est orientée selon un angle de 45° par rapport à la verticale.

4. Le système de surveillance de conducteur selon l'une quelconque des revendications précédentes, **caractérisé en ce que** ledit appareil d'éclairage (20) comprend une source de lumière (23) et un filtre de polarisation côté éclairage (25) conçu pour polariser le rayonnement (24) émis par ladite source de lumière (23).

5. Le système de surveillance de conducteur selon la revendication 4, **caractérisé en ce que** le filtre de polarisation côté éclairage (25) et/ou le filtre de polarisation côté imagerie (29) sont constitués ou font partie d'une fenêtre de protection (26) d'une unité de système de surveillance de conducteur (27).

6. Procédé de surveillance de conducteur d'un véhicule à moteur, comprenant l'éclairage du visage du conducteur, la capture d'images du visage du conducteur à l'aide d'un dispositif d'imagerie (12) dirigé vers le visage du conducteur, et l'évaluation de l'attention du conducteur au moyen d'un traitement d'images des images capturées par ledit dispositif d'imagerie (12), l'éclairage au moins du visage du conducteur avec un rayonnement d'éclairage polarisé (22), et le filtrage du rayonnement réfléchi (28, 33) allant du visage du conducteur à l'aide d'un filtre de polarisation côté imagerie (29), dans lequel le rayonnement d'éclairage polarisé (22) et le filtre de polarisation côté imagerie (29) ont chacun des directions de polarisation linéaire (31, 32), **caractérisé en ce que** l'angle entre les directions de polarisation linéaire (31) du rayonnement d'éclairage polarisé (22) et la polarisation côté imagerie (32) est d'au moins 10°, dans lequel la direction de polarisation linéaire (31) du rayonnement d'éclairage polarisé (22) et (32) du filtre de polarisation côté imagerie (29) est orientée selon un angle compris dans la plage de 30° à 60° par rapport à la verticale.
